# EUROPEAN PATENT APPLICATION

(11) **EP 3 355 175 A1**
(43) Date of publication of application: **01.08.2018**
(21) Application number: 18154148.3
(22) Date of filing: 30.01.2018
(51) Int. Cl.: G06F 3/0484

(54) **DISPLAY APPARATUS AND DISPLAY PROGRAM**

(30) Priority: 30.01.2017 JP 2017013926
(71) Applicant: Seiko Epson Corporation, Tokyo 160-8801 (JP)
(72) Inventor: UENO, Kikuo, Suwa-shi, Nagano 392-8502 (JP)
(74) Representative: MERH-IP Matias Erny Reichl Hoffmann Patentanwälte PartG mbB

(57) **Abstract**

A multifunction peripheral 1 (display apparatus) includes a touch panel 4, a process control unit 11 that displays a button 31 on the touch panel 4 while providing a sensing area 41 that is continuous with the button 31 around the button 31 and when the button 31 or the sensing area 41 is touched, performs a process corresponding to the button 31, and a change unit 12 that changes the size of the button 31 and reduces an area ratio of the sensing area 41 to the button 31 in enlarging the button 31 and increases the area ratio in reducing the button 31.

## Description

### BACKGROUND

### 1. Technical Field

The present invention relates to a display apparatus that has a touch panel for displaying operation buttons on a screen, and a display program that causes a computer to display buttons.

### 2. Related Art

Apparatuses that are provided with a touch panel are described, for example, in JP-A-2011-145769 and JP-A-2005-123866. The apparatuses described in JP-A-2011-145769 and JP-A-2005-123866 display a plurality of buttons, which are graphical user interface (GUI) components, on a touch panel, and when a user touches one of the buttons, a process that has been assigned to the touched button is performed. In the apparatuses described in JP-A-2011-145769 and JP-A-2005-123866, the number of user's button-touch operations is counted and the most frequently touched button is enlarged to become larger than other buttons and displayed.

In some apparatuses, around a button displayed on a touch panel, a sensing area that surrounds the button is provided. Such a sensing area is provided in consideration of user's operability, and if a user touches a position slightly off the button on the touch panel and the touched position is within the sensing area, the apparatus is controlled to perform the same process as the process to be performed when the button is touched. In changing the size of the button displayed on the touch panel, if the size of the sensing area is not changed together with the button-size change, the user may erroneously operate the button.

### SUMMARY

An advantage of some aspects of the invention is that there is provided a display apparatus capable of providing good operability when the size of a button displayed on a touch panel is changed. An advantage of another aspect of the invention is that there is provided a display program capable of providing good operability when the size of the button is changed by a computer.

To solve the above-described problem, a display apparatus according to an aspect of the invention includes a touch panel, a control section that displays a button on the touch panel while providing a sensing area that is continuous with the button around the button, and when the button or the sensing area of the button is touched, performs a process corresponding to the button, and a change section that changes the size of the button and reduces an area ratio of the sensing area to the button in enlarging the button and increases the area ratio in reducing the button.

According to this aspect of the invention, when a button displayed on a touch panel is enlarged, an area ratio of a sensing area to the button is reduced. In other words, the enlarged button enables a user to readily touch the button to which a desired process has been assigned. When the button is enlarged, to prevent the process to be executed when a user touches a point outside the button, the area ratio of the sensing area to the button is reduced, and thereby the execution of the user's unintended process can be prevented. On the other hand, when the size of the button displayed on the touch panel is reduced, the area ratio of the sensing area to the button is increased. In other words, if the size of the button is reduced, it becomes difficult for the user to touch the button to which a desired process has been assigned. To solve the problem, when the size of the button is reduced, to enable the process to be executed when the user touches a point outside the button, the area ratio of the sensing area to the button is increased, and thereby the execution of the user's intended process can be readily performed.

It is preferable that the display apparatus further include a function section that changes the function of the process corresponding to the button in accordance with the size of the button. With this configuration, a plurality of functions of a certain process can be assigned to a single button and thereby the operability of the display apparatus can be increased.

It is preferable that the change section maintain the area ratio at a constant ratio if the size of the button is greater than or equal to a predetermined size. With this configuration, when the size of the button is greater than or equal to a predetermined size, the user's operability of the button can be maintained.

In this configuration, to reduce the area ratio of the sensing area to the button in enlarging the button and to increase the area ratio in reducing the size of the button, it is preferable that the change section reduce a sensing area thickness that is a distance from a peripheral line of the button to a peripheral line of the sensing area in enlarging the button and increase the sensing area thickness in reducing the button.

It is preferable that the control section provide a button display area within the touch panel and display a plurality of the buttons within the button display area, and when enlarging one of the buttons, the change section reduce the other buttons to display all of the buttons within the button display area. With this configuration, within the limited button display area, the button that users frequently touch can be enlarged and emphasized, and thereby user's erroneous operation can be prevented. Furthermore, although the sizes of the buttons other the enlarged button are reduced, the buttons are still displayed within the button display area without disappearing. Accordingly, before and after changing the size of the button, the number of processes that can be performed by operating the buttons in the button display area is not changed.

It is preferable that characters be displayed on the button, and the change section change the content of the characters being displayed on the button in accordance with the size of the button. With this configuration, the enlarged button can be more easily distinguished from the other buttons, and thereby user's erroneous operation can be further prevented.

According to another aspect of the invention, there is provided a computer-readable display program for causing a computer to implement functions, the functions including a function of displaying a button, a function of providing a sensing area that is continuous with the button around the button, and performing a process corresponding to the button when the button or the sensing area of the button is touched, and a function of reducing an area ratio of the sensing area to the button in enlarging the button and increasing the area ratio in reducing the button.

According to this aspect of the invention, when a button displayed by a computer is enlarged, an area ratio of a sensing area to the button is reduced. In other words, the enlarged button enables a user to readily touch the button to which a desired process has been assigned. When the button is enlarged, to prevent the process to be executed when a user touches a point outside the button, the area ratio of the sensing area to the button is reduced, and thereby the execution of the user's unintended process can be prevented. On the other hand, when the size of the button displayed on the touch panel is reduced, the area ratio of the sensing area to the button is increased. In other words, if the size of the button is reduced, it becomes difficult for the user to touch the button to which a desired process has been assigned. To solve the problem, when the size of the button is reduced, to enable the process to be executed when the user touches a point outside the button, the area ratio of the sensing area to the button is increased, and thereby the execution of the user's intended process can be readily performed.

### BRIEF DESCRIPTION OF THE DRAWINGS

The invention will be described with reference to the accompanying drawings, wherein like numbers reference like elements.
Fig. 1 is a block diagram of a multifunction peripheral according to an embodiment of the invention.
Fig. 2 illustrates an operation screen in an initial state.
Fig. 3 is a graph illustrating a relationship between a button area and a sensing area.
Fig. 4 illustrates an operation screen in which a first button is enlarged.
Fig. 5 illustrates an operation screen in which the first button is maximized.
Fig. 6 illustrates an operation screen in which the first button is minimized.
Fig. 7 illustrates operation screens in which a function is changed by scaling buttons.

### DESCRIPTION OF EXEMPLARY EMBODIMENTS

Hereinafter, a multifunction peripheral, which is an example display apparatus according to an embodiment of the invention, will be described with reference to the attached drawings.

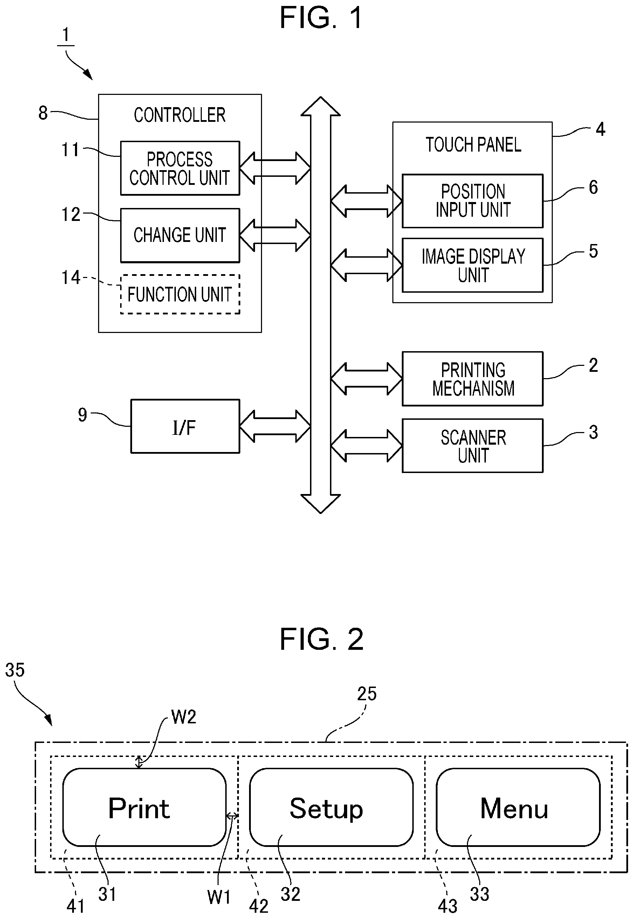

Fig. 1 is a block diagram of a multifunction peripheral according to an embodiment of the invention. A multifunction peripheral (display apparatus) 1 according to the embodiment has a printer function and a copy function. The multifunction peripheral 1 includes a printing mechanism 2, an optical scanner unit 3, a casing that accommodates these components, and a touch panel 4 that is disposed at a predetermined position on the housing. The touch panel 4 includes an image display unit 5 for displaying an operation screen and a position input unit 6 that is disposed on the screen of the image display unit 5. The position input unit 6 detects a user's touch position on an operation screen displayed on the image display unit 5. The image display unit 5 may be a liquid crystal display (LCD). The position input unit 6 may be, for example, a capacitive touch panel or an optical touch panel.

The multifunction peripheral 1 also includes a controller 8, which controls the printing mechanism 2 and the scanner unit 3, and an interface section 9 that communicates with another device via a network. The controller 8 implements the print function. In other words, the controller 8 controls the printing mechanism 2 in accordance with print job data that has been received via the interface section 9, and performs print processing for printing contents described by the print job data. The controller 8 can also implement the copy function. The controller 8 performs the copy function by printing image data, which has been generated by scanning a document by the scanner unit 3, by the printing mechanism 2 in accordance with an operation input via the touch panel 4. The multifunction peripheral 1 may include other functions. For example, the multifunction peripheral 1 may include a facsimile function for sending image data that has been generated by scanning a document by the scanner unit 3 to a destination that is input via the touch panel 4.

The controller 8 includes a processor, a read-only memory (ROM), and a random access memory (RAM). The processor may be, for example, one of or a combination of a central processing unit (CPU), an application-specific integrated circuit (ASIC), and a signal processing circuit. In the following description, the controller 8 includes a CPU. Alternatively, the controller 8 may include a hard disk drive (HDD) that stores received data and data of scanned documents.

The controller 8 implements a process control unit 11 (control unit) and a change unit 12 by reading a control program (display program) that are stored in the ROM and executing the control program by the CPU. In other words, the control program causes the controller 8 to function as a process control section (process control unit 11) and a change section (change unit 12).

The process control unit 11 displays buttons 31 to 33, which are GUI components, within a button display area 25, which has been provided in advance, on the touch panel 4. The button display area 25 is a band-shaped rectangular area that extends in the left-right direction of the touch panel 4. A process is assigned to each of the buttons 31 to 33 displayed on the button display area 25.

Fig. 2 illustrates an example operation screen displayed by the process control unit 11 on the touch panel 4. On an operation screen 35 illustrated in Fig. 2, in the button display area 25, three buttons 31 to 33 are displayed from the left side to the right side in a row. A print process is assigned to the first button 31, which is located at a left end. On a central section of the first button 31, characters "Print" are displayed. A setting process is assigned to the second button 32, which is located at a central section. On a central section of the second button 32, characters "Setup" are displayed. A menu display process is assigned to the third button 33, which is located at a right end. On the third button 33, characters "Menu" are displayed. The setting process is a process for displaying a setting screen for setting a function of a process such as the number of print copies in a print process or a copy process. The menu display process is a process for displaying a menu screen for selecting another function or process in the multifunction peripheral 1.

The process control unit 11 provides sensing areas 41 to 43 that are continuous with the buttons 31 to 33 and provided around the buttons 31 to 33 within the button display area 25 respectively. The sensing areas 41 to 43 surround the buttons 31 to 33 respectively, and the outlines of the sensing areas 41 to 43 correspond to the shapes of the buttons 31 to 33 respectively. When any one of the buttons 31 to 33 and the sensing areas 41 to 43, which correspond to the buttons 31 to 33 respectively, is touched, the process control unit 11 causes the multifunction peripheral 1 to perform the same process (process corresponding to the button 31, the button 32, or the button 33) as the process that has been assigned to the touched button (the button 31, the button 32, or the button 33) or the button that corresponds to the touched sensing area (the sensing area 41, the sensing area 42, or the sensing area 43).

The change unit 12 changes the sizes of the buttons 31 to 33 within the button display area 25 in accordance with a user's pinching operation. After the user's pinching operation has been completed, the change unit 12 maintains the sizes of the buttons 31 to 33 until a next pinching operation is performed.

The pinching operation includes operations for narrowing or widening the distance between two points touched by a user on the touch panel 4. When a user touches two points on the buttons 31 to 33 on the touch panel 4 and widens the distance between the two points while touching the two points, the change unit 12 increases the sizes of the buttons 31 to 33, and when the distance between the two points is narrowed, the change unit 12 reduces the sizes of the buttons 31 to 33. Maximum sizes and minimum sizes of the buttons 31 to 33 within the button display area 25 are set in advance. Accordingly, if the sizes of the buttons 31 to 33 have been increased to the maximum or reduced to the minimum and the pinching operation is further continued, the change unit 12 maintains the sizes of the buttons 31 to 33 to the maximum sizes or minimum sizes. The sizes of the buttons 31 to 33 illustrated in Fig. 2 are sizes of the buttons 31 to 33 in the initial state and are reference sizes of the buttons 31 to 33.

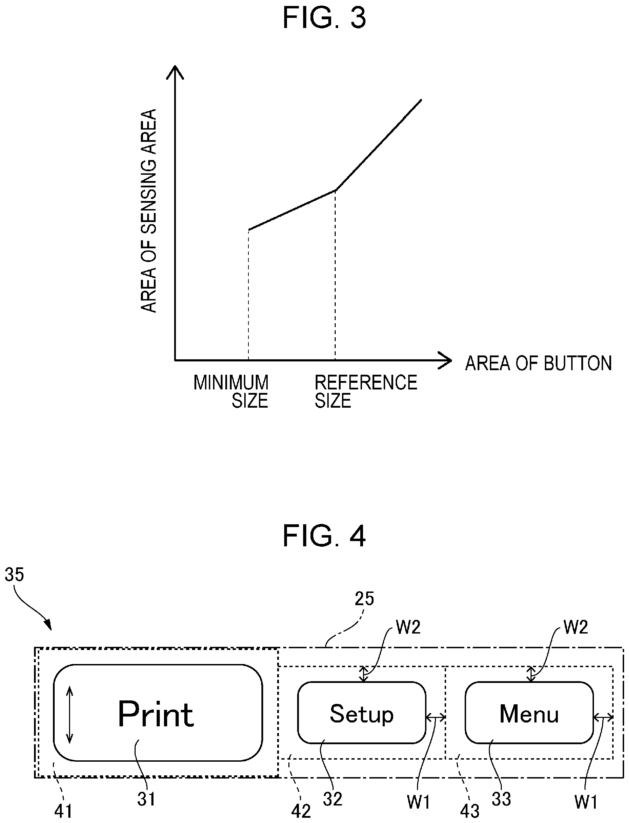

The change unit 12, until the buttons 31 to 33 become predetermines sizes, reduces area ratios of the sensing areas 41 to 43 to the buttons 31 to 33 with the increase in sizes of the buttons 31 to 33 respectively, whereas increases the area rations of the sensing areas 41 to 43 to the buttons 31 to 33 with the reduction in sizes of the buttons 31 to 33 respectively. In this embodiment, with an increase in sizes of the buttons 31 to 33, the change unit 12 reduces sensing area thicknesses W1 that are distances from left and right peripheral lines of the buttons 31 to 33 to right and left peripheral lines of the sensing areas 41 to 43 respectively, and sensing area thicknesses W2 that are distances from upper and lower peripheral lines of the buttons 31 to 33 to upper and lower peripheral lines of the sensing areas 41 to 43 respectively, and thereby changes the area ratios. On the other hand, with a reduction in sizes of the buttons 31 to 33, the change unit 12 increases the sensing area thicknesses W1 and W2 of the sensing areas 41 to 43 respectively, and thereby changes the area ratios. When the sizes of the buttons 31 to 33 become predetermined sizes or more, the change unit 12 maintains the area ratios of the sensing areas 41 to 43 to the areas of the buttons 31 to 33 respectively. Fig. 3 is a graph illustrating a relationship between an area of the button 31 and an area of the sensing area 41, an area of the button 32 and an area of the sensing area 42, or an area of the button 33 and an area of the sensing area 43. The horizontal axis shows an area of the button 31, 32, or 33 and the vertical axis shows an area of the corresponding sensing area 41, 42, or 43. In this case, for example, the predetermined sizes are the reference sizes.

In accordance with the sizes of the buttons 31 to 33, the change unit 12 changes the sizes of the characters displayed on the buttons 31 to 33. In other words, the change unit 12 increases the sizes of the displayed characters as the buttons 31 to 33 are enlarged respectively, and reduces the sizes of the displayed characters as the buttons 31 to 33 are reduced respectively.

Furthermore, when one of the buttons 31 to 33 that have been displayed within the button display area 25 is enlarged in accordance with a pinching operation, the change unit 12 reduces the sizes of the other buttons, and thereby all of the three buttons 31 to 33 are displayed within the button display area 25. In reducing the sizes of the other buttons 31, 32, or 33, the change unit 12 reduces the sizes of the other buttons 31, 32, or 33 until the sensing areas 41, 42, or 43 corresponding to the other buttons 31, 32, or 33 are displayed within the button display areas 25. In this processing, the sizes of the other buttons 31, 32, or 33 are determined so as to have maximum sizes respectively within ranges the sensing areas 41 to 43 do not overlap with each other. The sizes of the other buttons 31, 32, or 33 are changed such that the ratio of the sizes of the other buttons is maintained to a constant ratio.

### Button Size Change

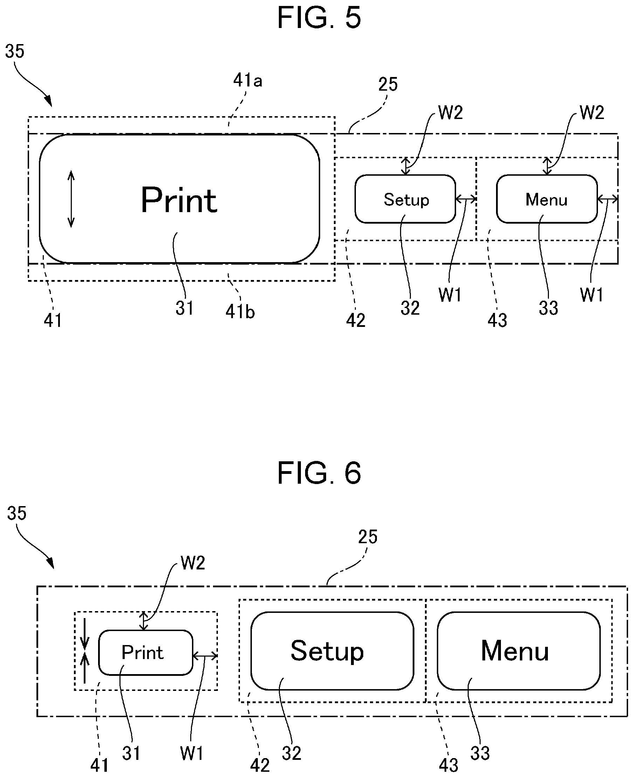

Fig. 4 illustrates the operation screen 35 in which the first button 31 is enlarged from a reference size. Fig. 5 illustrates the operation screen 35 in which the first button 31 is enlarged to a maximum size. Fig. 6 illustrates the operation screen 35 in which the first button 31 is reduced to a minimum size.

In an initial state of the multifunction peripheral 1, when electric power is supplied to the multifunction peripheral 1 and the touch panel 4 is activated, the touch panel 4 displays the operation screen 35 illustrated in Fig. 2. On the operation screen 35, the first button 31, the second button 32, and the third button 33 are displayed. The sensing areas 41 to 43 are provided around the buttons 31 to 33 respectively. The sizes of the buttons 31 to 33 are reference sizes, and their shapes are the same. The sizes and shapes of the sensing areas 41 to 43 of the buttons 31 to 33 are the same.

When a user touches two points on the first button 31 on the operation screen 35 and performs a pinching operation (pinch out) for increasing the distance between the two touched points, the change unit 12 increases the size of the first button 31 to a size larger than its reference size in accordance with the pinching operation. The change unit 12 also enlarges the characters displayed on the first button 31 together with the enlargement of the first button 31. The change unit 12 also enlarges the sensing area 41 of the first button 31 together with the enlargement of the first button 31. In this process, the change unit 12 enlarges the first button 31 and the sensing area 41 of the first button 31 while maintaining the area ratio of the sensing area 41 of the first button 31 to the first button 31 at a constant ratio.

When enlarging the first button 31, the change unit 12 reduces the other buttons (the second button 32 and the third button 33) to display all the buttons 31 to 33 within the button display area 25. The sensing areas 42 and 43 of the reduced buttons 32 and 33 are displayed within the button display area 25. Furthermore, to reduce the second button 32, the change unit 12 increases the sensing area thicknesses W1 and W2 of the sensing area 42 to increase the area ratio of the sensing area 42 of the second button 32 to the second button 32. To reduce the third button 33, the change unit 12 increases the sensing area thicknesses W1 and W2 of the sensing area 43 to increase the area ratio of the sensing area 43 of the third button 33 to the third button 33.

As described above, in this embodiment, a particular button that users frequently touch, such as the first button 31, is enlarged to emphasize the particular button (the first button 31). By emphasizing a particular button, the operability of the multifunction peripheral 1 can be increased and user's erroneous operation can be prevented. To enlarge the first button 31 to a size larger than its reference size, the area ratio of the sensing area 41 of the first button 31 to the first button 31 is maintained at a constant ratio. By this processing, when the first button 31 is enlarged, the user's operability of the first button 31 can be maintained. Although the sizes of the buttons (the second button 32 and the third button 33) other than the enlarged first button are reduced, the other buttons are still displayed within the button display area 25 without disappearing, and the other buttons can be operated. Accordingly, before and after the change of the size of the first button 31, the number of processes that can be performed via the operation screen 35 is not changed.

Furthermore, as the first button 31 is enlarged, the characters on the first button 31 are also enlarged. Accordingly, it becomes easier to distinguish the enlarged first button 31 from the other buttons (the second button 32 and the third button 33). This further prevents user's erroneous operation.

As illustrated in Fig. 5, when the first button 31 is enlarged to the maximum, an upper peripheral line portion and a lower peripheral line portion of the peripheral line of the first button 31 come into contact with the peripheral line of the button display area 25. Accordingly, when the first button 31 is enlarged to the maximum, an upper sensing area section 41a that has been provided on the upper side of the upper peripheral line of the first button 31 and a lower sensing area section 41b that has been provided on the lower side of the lower peripheral line of the first button 31 are moved exceeding the button display area 25 to the outside. In such a case, the change unit 12 disables the upper sensing area section 41a and the lower sensing area section 41b, which have been moved outside the button display area 25. In other words, the change unit 12 disables the process corresponding to the first button 31 when a user touches the upper sensing area section 41a or the lower sensing area section 41b that have been moved outside the button display area 25.

To return the first button 31 to its reference size, a user touches two points on the first button 31 on the operation screen 35 and performs a pinching operation (pinch-in operation) for narrowing the distance between the two touched points. By this pinching operation, the change unit 12 reduces the size of the first button 31 to its reference size. The change unit 12 also reduces the size of the characters displayed on the first button 31 together with the reduction of the first button 31. The change unit 12 further reduces the size of the sensing area 41 together with the reduction of the first button 31. The change unit 12 reduces the first button 31 and the sensing area 41 while maintaining the area ratio of the sensing area 41 to the first button 31 at the constant ratio.

When a user touches two points on the first button 31 on the operation screen 35 illustrated in Fig. 2 and performs a pinching operation (pinch-in operation) for narrowing the distance between the two touched points, as illustrated in Fig. 6, the change unit 12 reduces the size of the first button 31 to a size smaller than its reference size in accordance with the pinching operation. The change unit 12 also reduces the size of the characters displayed on the first button 31 together with the reduction of the first button 31. The change unit 12 further reduces the size of the sensing area 41 of the first button 31 together with the reduction of the first button 31. The change unit 12 reduces the size of the first button 31 while increasing the area ratio of the sensing area 41 of the first button 31 to the first button 31. As illustrated in Fig. 6, if the size of the first button 31 is reduced to a size smaller than the reference size, the change unit 12 increases the thicknesses W1 and W2 of the sensing area 41 in accordance with the reduction of the first button 31 to increase the area ratio of the sensing area 41 of the first button 31 to the first button 31.

As described above, in this embodiment, the size of the first button 31 can be reduced to make the first button 31 less noticeable. By this operation, for example, when the first button 31 is not frequently used, the operability of the multifunction peripheral 1 can be increased, and thereby user's erroneous operation can be prevented.

It is difficult for a user to touch the first button 31 when the size of the first button 31 is reduced. This embodiment, however, the area ratio of the sensing area 41 of the first button 31 is increased and the process that has been assigned to the first button 31 is performed even if a user touches a point outside the first button 31. Accordingly, the user can readily perform the desired process.

To return the first button 31 to its reference size, the user touches two points on the first button 31 on the operation screen 35 and performs a pinching operation (pinch-out operation) for widening the distance between the two touched points. By this pinching operation, the change unit 12 enlarges the first button 31 to its reference size. By this operation, the sensing area 41 also returns to its original size. The change unit 12 also enlarges the characters displayed on the first button 31 together with the enlargement of the first button 31. Furthermore, the change unit 12 enlarges the sensing area 41 of the first button 31 together with the enlargement of the first button 31. To enlarge the first button 31 to the reference size, the change unit 12 reduces the thicknesses W1 and W2 of the sensing area 41 in accordance with the enlargement of the first button 31 to reduce the area ratio of the sensing area 41 to the first button 31.

In the above-described embodiment, the size of the first button 31 is changed. Similarly to the first button 31, the sizes of the second button 32 and the third button 33 can also be changed. As the sizes of the buttons 32 and 33 are changed, the sizes of the sensing areas 42 and 43 are changed. In the above-described embodiment, the size of a single button (the first button 31) is changed; however, two buttons may be enlarged or reduced.

### Modifications

As illustrated in Fig. 6, when reducing one of the three buttons 31 to 33, the change unit 12 may enlarge the other two buttons within the button display area 25. By this operation, the two buttons can be emphasized.

The sizes of the buttons may be changed anytime; alternatively, a button-size change mode may be provided to enable a user to change the size of a button while the button-size change mode is on, and in a normal mode, the user is not allowed to change the size of a button. The trigger for changing the size of a button is not limited to the above-described embodiments. For example, a user may enter dimensions of a button by using numbers without using a pinching operation to change the size of the button, or a control program may automatically change the size of a button in accordance with the frequency of use of the button.

### Other Embodiments

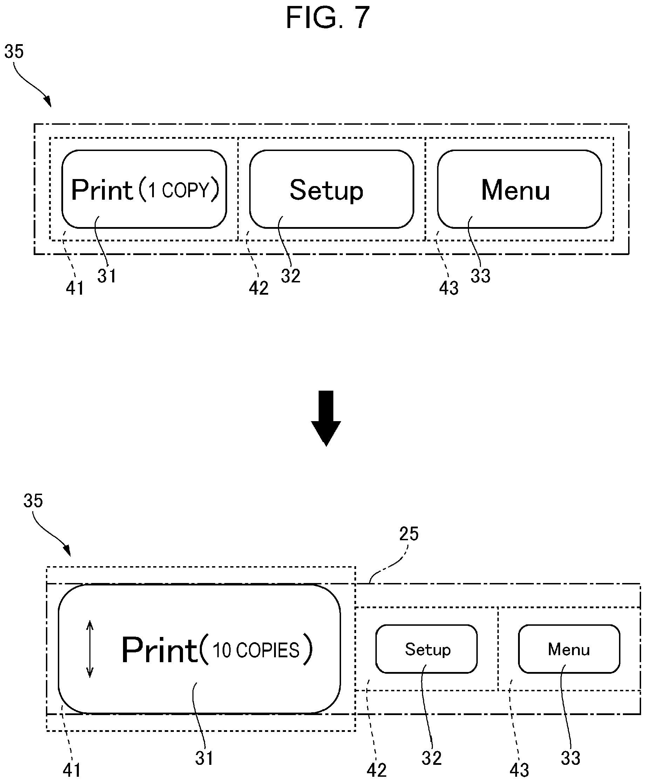

As illustrated in Fig. 1 by a dotted line, the controller 8 may include a function unit 14 that changes functions of processes that have been assigned to the buttons 31 to 33 in accordance to the sizes of the buttons 31 to 33. In other words, a control program may cause the controller 8 to function as a process control section, a change section, and a function section (function unit 14). Fig. 7 illustrates operation screens in which a function is changed by scaling the buttons.

In this example, for example, the function unit 14 changes the number of print copies (function) in a print process in accordance with the size of the first button 31. For example, when the first button 31 is a reference size, the function unit 14 sets the number of print copies in the print process to one. When the first button 31 is a maximum size, the function unit 14 sets the number of print copies in the print process to ten. As illustrated in Fig. 7, the function unit 14 adds and shows the content of the function in the display on the first button 31. In other words, if the first button 31 is the reference size, as illustrated in the upper drawing in Fig. 7, the function unit 14 adds and displays the content of the function of " (1 COPY)" to the end of the display "Print". If the first button 31 is the maximum size, as illustrated in the lower drawing in Fig. 7, the function unit 14 adds and displays the content of the function of "(10 COPIES)" to the end of the display "Print".

When a user touches the first button 31 of the reference size, the multifunction peripheral 1 prints one copy in the print process, and when a user touches the first button 31 of the maximum size, the multifunction peripheral 1 prints ten copies in the print process. By this operation, a plurality of functions can be assigned to the buttons 31 to 33 respectively and thereby the operability of the multifunction peripheral 1 can be increased.

In the above-described embodiments of the invention, the example display apparatus, which is the multifunction peripheral 1, is used; alternatively, various display apparatuses that includes the touch panel 4 may be used. For example, an embodiment of the invention may employ a single-function printer that has only a print function or a single-function scanner that has only a scanner function. Furthermore, an embodiment of the invention may employ a computer apparatus that is connected to the touch panel 4 or a tablet-type device that includes the touch panel 4. For example, a tablet-type operation terminal may be provided separately from a printer and the multifunction peripheral 1, and the operation terminal may communicate with the printer or the multifunction peripheral 1 for operation. The image display unit may be a device other than the touch panel 4, and for example, by using an input device such as a mouse or a touch pad, an input may be performed on an operation screen that is displayed on an image display section. In such a case, the touch operation includes a click operation with the mouse, and other operations.

## Claims

1. A display apparatus (1) comprising:
a touch panel (4);
a control section (11) configured to display a button (31, 32, 33) on the touch panel (4) while providing a sensing area (41, 42, 43) that is continuous with the button (31, 32, 33) around the button (31, 32, 33), and when the button (31, 32, 33) or the sensing area (41, 42, 43) of the button (31, 32, 33) is touched, is configured to perform a process corresponding to the button (31, 32, 33); and
a change section (12) configured to change the size of the button (31, 32, 33) and reduce an area ratio of the sensing area (41, 42, 43) to the button (31, 32, 33) in enlarging the button and increase the area ratio in reducing the button (31, 32, 33).

2. The display apparatus (1) according to Claim 1, further comprising:
a function section (14) configured to change the function of the process corresponding to the button (31, 32, 33) in accordance with the size of the button (31, 32, 33).

3. The display apparatus (1) according to Claim 1 or Claim 2, wherein the change section (12) is configured to maintain the area ratio at a constant ratio if the size of the button (31, 32, 33) is greater than or equal to a predetermined size.

4. The display apparatus (1) according to any one of Claim 1 to Claim 3, wherein the change section (12) is configured to reduce a sensing area (41, 42, 43) thickness (W1, W2) that is a distance from a peripheral line of the button (31, 32, 33) to a peripheral line of the sensing area (41, 42, 43) in enlarging the button (31, 32, 33) and increase the sensing area (41, 42, 43) thickness (W1, W2) in reducing the button (31, 32, 33).

5. The display apparatus (1) according to any one of Claim 1 to Claim 4, wherein the control section (11) is configured to provide a button display area (25) within the touch panel (4), and to
display a plurality of the buttons(31, 32, 33) within the button display area (25), and
when enlarging one of the buttons(31, 32, 33), the change section (12) is configured to reduce the other buttons(31, 32, 33) to display all of the buttons(31, 32, 33) within the button display area (25).

6. The display apparatus (1) according to any one of Claim 1 to Claim 5, wherein characters are displayed on the button (31, 32, 33), and
the change section (12) is configured to change the content of the characters being displayed on the button (31, 32, 33) in accordance with the size of the button (31, 32, 33).

7. A computer-readable display program for causing a computer to implement functions, the functions comprising:
a function of displaying a button (31, 32, 33);
a function of providing a sensing area (41, 42, 43) that is continuous with the button (31, 32, 33) around the button (31, 32, 33), and performing a process corresponding to the button (31, 32, 33) when the button or the sensing area (41, 42, 43) of the button (31, 32, 33) is touched; and
a function of reducing an area ratio of the sensing area (41, 42, 43) to the button (31, 32, 33) in enlarging the button(31, 32, 33) and increasing the area ratio in reducing the button (31, 32, 33).
